# EUROPEAN PATENT SPECIFICATION

(11) **EP 2 604 573 B1**
(45) Date of publication and mention of the grant of the patent: **28.01.2015**
(21) Application number: 12425199.2
(22) Date of filing: 14.12.2012
(51) Int. Cl.: B67D 1/00, B67D 1/08, C02F 1/00, C02F 1/30, C02F 1/32, C02F 3/04, B01D 24/00

(54) **Water dispensing device with UV steriliser**
Wasserspender mit UV-Sterilisationsgerät
Distributerur d'esu avec dispositif de stérilisation aux ultraviolets

(30) Priority: 14.12.2011 IT VI20110318; 23.12.2011 IT VI20110335
(43) Date of publication of application: 19.06.2013
(73) Proprietor: Beghelli S.p.A., 40050 Monteveglio, Bologna (IT)
(72) Inventor: Beghelli, Gian Pietro, Monteveglio (BO) (IT)
(74) Representative: Santi, Filippo

(56) References cited:
- WO-A1-2010/040721
- WO-A2-2010/056486
- US-A- 5 881 913
- US-A1- 2011 031 171

## Description

The present invention relates generally to a water dispensing device.

In particular, the invention relates to a household dispensing device (dispenser) which is able to filter water (preferably drinking water) and also to sanitize and sterilize said water by means of ultraviolet radiation which is generated by a light source, such as for example lamps, discharge tubes and/or LED light sources.

Water sanitizing devices are already known and used; they use ultraviolet rays, such as for example the known hydration devices which are provided with a nozzle from which it is possible to drink the sanitized water; the water purifying is carried out by means of ultraviolet rays coming out from a LED source.

The above mentioned devices require to install a whole purifying hydraulic system, which is able to direct the water from a container or from a generic water withdrawal point to the nozzle; the hydraulic system generally includes a dipping LED ultraviolet disinfection apparatus, comprising a UV-C lamp, which is placed in a water container and which emits ultraviolet rays with a wavelength able to remove bacteria and viruses.

However, said devices, which are still of a professional type (tabletop apparatus) or which can be installed below the sink for a household use, are considerably expensive, bulky and complex and they cannot be used in household portable devices; moreover, said known devices emit harmful ultraviolet rays and therefore they must be shielded; finally, said devices are generally provided without any suitable water filtering systems and therefore a water filtering is carried out neither before and after nor during the sanitizing phase.

Water purifying professional systems are also known; they can be installed below or above the sink and are equipped with a cooling compressor for dispensing cold and/or sparkling water, with a UV-rays disinfection system and with a filtering system so as to remove from the water smells, tastes, colors and unwanted foreign bodies, in order to make the drinkable water especially refined for all household uses and/or for restaurants, gyms or companies.

However, said professional systems have the drawback of requiring a direct installation on the household water mains and, consequently, they require an expensive and complex maintenance.

In particular, a water dispensing device having the features of the preamble of the appended claim 1 is known from US5881913A

Household and professional drinkable water purifying and filtering systems are also known; they have one or more replaceable filter cartridges (such as the traditional household jugs).

Said purifying and filtering systems are generally equipped with an openable cover, through which the water can be poured; the water is suitably treated and filtered through the filters, in order to reduce or completely remove substances harming the water taste and/or flavor, contaminating substances or other sediments and polluting organic and inorganic compounds that may be dissolved in drinking water; furthermore, the replacement of the filtering cartridges is generally indicated by means of suitable electronic circuits that are able, for example, to count the number of openings of the water inlet lid or can be carried out through simple timing systems, able to indicate the need for a cartridge replacement when a prefixed time period is over, starting from the first installation of the system or from the last cartridge replacement.

However, these devices only achieve a water filtering (without disinfecting and/or sanitizing the water) and do not provide for replacing one or more filtering cartridges according to the actual amount of water that is actually filtered.

Moreover, said devices extremely reduce the water hardness and their effectiveness is extremely variable depending on the type of filtering, so that, after said filtering operation, sometimes even an increase of some substances which have not been found before the water filtering occurs, with the result that it is possible to also have an increase of the bacterials after having carried out the filtering phase.

In fact, removing chlorine and its chemical disinfecting compounds, said filters expose the water to contamination and proliferation of external bacterial agents.

Finally, since said water filtering and purifying devices have a very high water pressure, due to the high flow rate of the water system to which they are connected, they are mainly vertically placed, in order to extend as much as possible the contact between the water and the filtering material; therefore, special preferential paths for the water flow occur, thus causing the drawback according to which only a portion of the filtering material is able to work and therefore wasting all the surrounding filtering material.

Other household sanitizing and purifying devices are substantially horizontally placed and provide for splitting up the water flow into two flows inside the device casing.

However, the above systems are deformable due to the fact that it is necessary to place the filtering cartridge in its seat; moreover, also in this case, the water flow cannot be always constant and the water distribution inside the device casing cannot be always uniform, as well as it is not possible to completely make the most of the materials.

Another drawback of some known systems is given by the fact that a leakage, albeit minimal, of the filtering material occurs within the container of the purified water, thus causing obvious negative effects.

Some water dispensing devices are equipped with a device for separating water from impurities and/or harmful substances and also with a valve, integrated with the same dispenser, for regulating the water flow; however, since the device for separating water from impurities is a consumable and perishable item, it should be often changed, thus resulting in a frequent replacement of the same control valve or its parts.

This also involves a waste of the material constituting the valve, since said material is not subjected to the same wear of the chemical components of the device.

Furthermore, in case of defective valve, said systems need a replacement of the whole device, including said control valve, thus wasting materials and resources.

An object of the present invention is therefore to obviate the above mentioned drawbacks of the prior art and in particular to provide a household water dispensing device, particularly for dispensing drinking water, that is able to filter water and also to sanitize and purify said water through radiation emitted by an ultraviolet lamp.

Another object of the present invention is to provide a water dispensing device, which, besides having an extremely high water capacity, is also provided with a filtering element which has a life significantly greater than the known devices, being able to continuously control and indicate the filter's conditions and the operating conditions of the sanitizing device.

Another object of the present invention is to provide a water dispensing device, which allows a uniform distribution of the water flow coming out the filtering element.

A further object of the present invention is to provide a water dispensing device, which is easy and inexpensive to made, since it does not require a fixed plant which is series-connected to the household hydraulic mains.

Another object of the present invention is to provide a water dispensing device, which has a size suitable for the limited space of a normal kitchen, thus fitting the height existing between a worktop and a wall unit of the kitchen.

These and other objects are achieved by a water dispensing device according to the appended claim 1. Further technical features are also described in the dependent claims.

Advantageously, the dispensing device according to the present invention is a particular household device and allows to exploit the available water resources using the technology of ultraviolet light rays (UV-C band with a peak, in particular, equal to 254 nm) for sanitizing and purifying drinking water (in this regard, the mandatory requirements regarding harmless and drinking water, as defined by law, state that water should not contain any toxic or polluting substances, such as heavy metals, solvents, etc. and any pathogenic microorganisms and parasites, such as salmonella, typhoid, cholera, etc., while it should contain enough minerals, such as calcium, sodium, etc.).

In particular, the device or dispenser according to the invention uses a UV-rays sanitizing technology, as well as a suitable filtering technology (which preferably employs a changeable filter), which is able to reduce or eliminate the contaminants, as well as to improve the taste and the flavor of the water.

In fact, the filter which is used in the dispensing device according to the invention has a housing having a horizontal cellular structure, comprising a plurality of filtering cells, each having a respective volume, so as to evenly distribute the water to be filtered.

It is thus possible to fix a predetermined water flow rate, simply by providing, in each of the filtering cells, a through opening having sizes proportional to the respective volume of the related filtering cell.

Another advantage is given by the fact that the filtering element has a first and a second micrometer grid, which are respectively placed as a mechanical input filter and a mechanical output filter, so as to stop any impurities of the water and also to prevent leakage of the filtering material; equally advantageously, at least one of the micrometer grids is fixed, respectively, at the inlet openings and at the outlet openings through a co-molding phase.

Finally, unlike the filtering systems with osmotic membranes (in which a real separation of the impurities from the water occurs), the filter according to the present invention employs filtering material including carbon and resin, so that the impurities are directly trapped inside.

The water dispensing device is also preferably provided with a battery supply (for example, rechargeable batteries) and with a plurality of lights signaling the activation of the UV-rays sanitizing and purifying device; the above mentioned features make the device completely portable, since it does not require the mains power supply and/or the fixed or semi-fixed connection to the household hydraulic system, being possible to manually fill the dispenser through a suitable removable tank.

The operation of the dispenser is also easy and intuitive thanks to the status signaling by means of light signals of different colors.

Additionally, the device according to the invention is equipped with a monitoring and control system, with a suitable electronic circuit, able to control the actual use of the filter, on the basis of the actual quantity of the filtered water.

Further objects and advantages of the present invention will become clear from the following description, which refers to a practical preferred embodiment of the water dispensing device, which is the object of the invention, and from the enclosed drawings, in which:

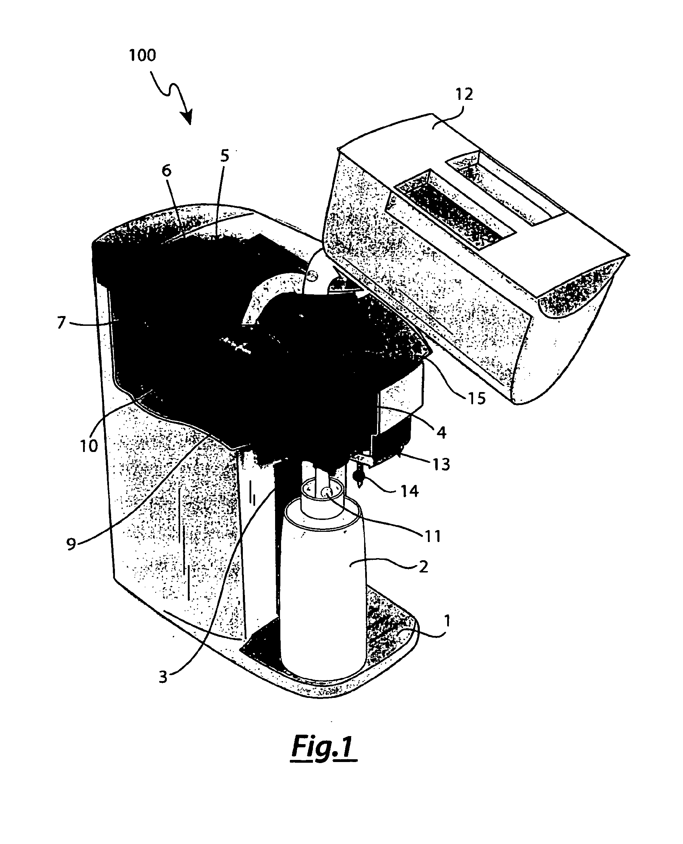

- figure 1 shows a cross-section perspective view of the water dispensing device, according to the present invention, with a jug extracted from the housing;

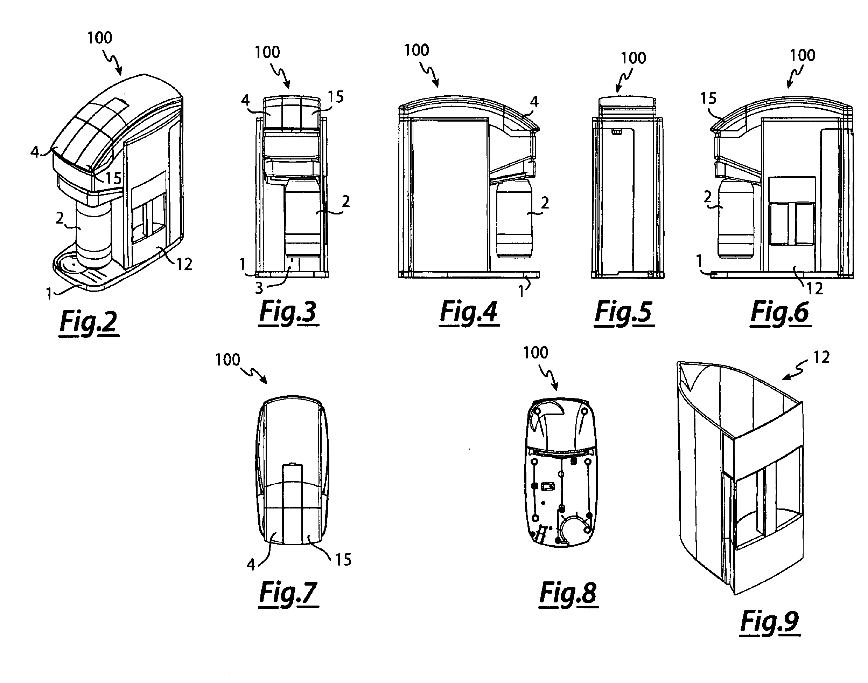

- figure 2 shows a perspective view of the water dispensing device of figure 1, with the jug placed inside the housing;
- figure 3 shows a front view of the water dispensing device of figure 1, with the jug placed inside the housing;
- figure 4 shows a first side view of the water dispensing device of figure 1, with the jug placed inside the housing;
- figure 5 shows a rear view of the water dispensing device of figure 1, with the jug placed inside the housing;
- figure 6 shows a second side view of the water dispensing device of figure 1, with the jug placed inside the housing;
- figure 7 shows a top view of the water dispensing device of figure 1, with the jug placed inside the housing;
- figure 8 shows a bottom view of the water dispensing device of figure 1, with the jug placed inside the housing;
- figure 9 shows a perspective view of the jug of the water dispensing device of figure 1;

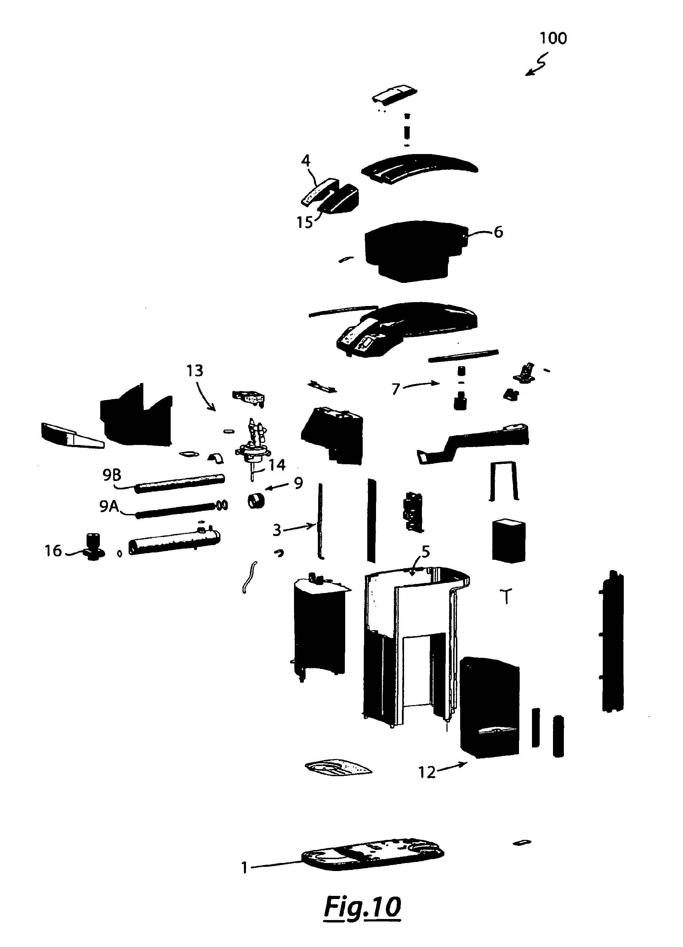

- figure 10 shows an exploded view of the water dispensing device of figure 1;
- figure 11 shows an exploded view of the filter used in the water dispensing device, according to the invention;
- figure 12 shows an exploded front view of the filter of figure 11;
- figure 13 shows a top view of the filter of figure 11;
- figure 14 shows a bottom view of the filter of figure 11.

Referring to the above mentioned figures, the water dispensing device 100 comprises a base plate 1, where it is possible to place the containers 2 to be filled with filtered and purified water, an outer housing or shell, which has a multicolor light operation display 3, equipped with a light guide which constitutes a self diagnostic and control device for signaling any failures and for controlling the filtering and sanitizing apparatus. In particular, the light operation display 3 shows, with different colors, the status of the different elements of the device 100.

A push-button 4 for dispensing purified water is provided above the outer shell, so that by pressing the button 4, after a bacterial pre-reduction phase, the device 100 is able to deliver water.

In the inner compartment 5 there are silicone pipes (not shown) for delivering water outside and a power cable (not shown) for connecting the device 100 to the mains power supply.

A water load tank 6 with a control or throttle valve 7, placed on the bottom, is provided inside the chamber 5 in upper position and the chamber 5 also contains a UV reactor 9, always powered for sanitizing water with UV-C rays, a replaceable filtering cartridge or filter 10 and an electronic control unit (not shown); the load tank 6 has a mainly horizontal development, has a capacity of up to 2 liters, is removable from the device 100 and may be washed, even in a dishwasher.

Alternatively, the load tank 6 can also be filled using a removable jug 12, which is inserted in the housing of the device 100.

In particular, the device 100 according to the invention allows an easy installation especially for household purposes, as it does not require a fixed or semi-fixed connection to the hydraulic system, and it also works as a dispenser for purifying and delivering drinking water and is equipped with a suitable multiple stages filtering device, based on a mixture of silver activated carbon and ion-exchange resins and able to reduce or eliminate the contaminants, as well as to improve the taste and the flavor of the water.

More in detail, the filter 10 is able to ensure a filtering efficiency up to 1000 liters of water, i.e. up to 6 months of use on average, and includes a containment body 21, a cover element 22 with a plurality of slots 23, a first micrometer grid 24 and a second micrometer grid 25.

The containment body 21 is filled with filtering material, in particular comprising silver activated carbon and ion-exchange resin, and the particle size of one of the two grids is proportional to the particle size of the other, so that the materials can be suitably mixed, thus forming a uniform filtering bed.

The filter 10 is also provided with a control valve for regulating the level of water filtration, which is also adjustable according to the characteristics of the available drinking water or according to the user's tastes.

Preferably, the cover element 22 has a pyramidal shape, with the tip pointing upwards; moreover, according to a preferred embodiment, the first micrometer grid 24 is co-molding inside the slots 23 and has a rate less than or equal to 300 micron, thus being effective as a mechanical filter for any impurities contained in the water to be treated.

Said first micrometer grid 24 allows the entry of water inside the filter 10 and prevents escaping the filtering material contained therein.

According to a further preferred embodiment of the invention, the pyramidal covering of the filter 10 is centrally covered by a rectangular structure 26 with vertical openings 27.

The vertical openings 27 facilitate venting of air inside the containment body 21 and - simultaneously - avoid that the filtering material is ejected by the covering element 22 and flows into the water.

In detail, the truncated pyramid shaped structure makes it easier to push the air towards the vertical openings 27, during the filling of the filter with water.

Advantageously, the slots 23 are arranged in equal number on each face of the pyramid that constitutes the cover element 22 and, in particular, the slots 23 are oriented substantially parallel to the base of the pyramid of the cover element 22, extending on each face almost from one corner to the opposite one.

This arrangement ensures a correct water inlet with a constant flow rate and evenly distributes the water flow in all areas of the containment body 21 of the filter 10.

In a further preferred embodiment of the invention, the vertical openings 27 have a cross section less than or equal to 300 micron, in order to ensure that the filtering material does not come out from said openings 27 during the air venting and during the filling of water.

Therefore, the formation of air pockets at the sides of the cover member 22 is avoided and moreover, due to its squared shape, the filter 10 can be made with higher accuracy with respect for example to a cylindrical shape.

Above the rectangular structure 26 gripping means 31 are provided, so as to hold the filter 10 and to push it into or to remove it from its seat provided inside the dispensing device 100.

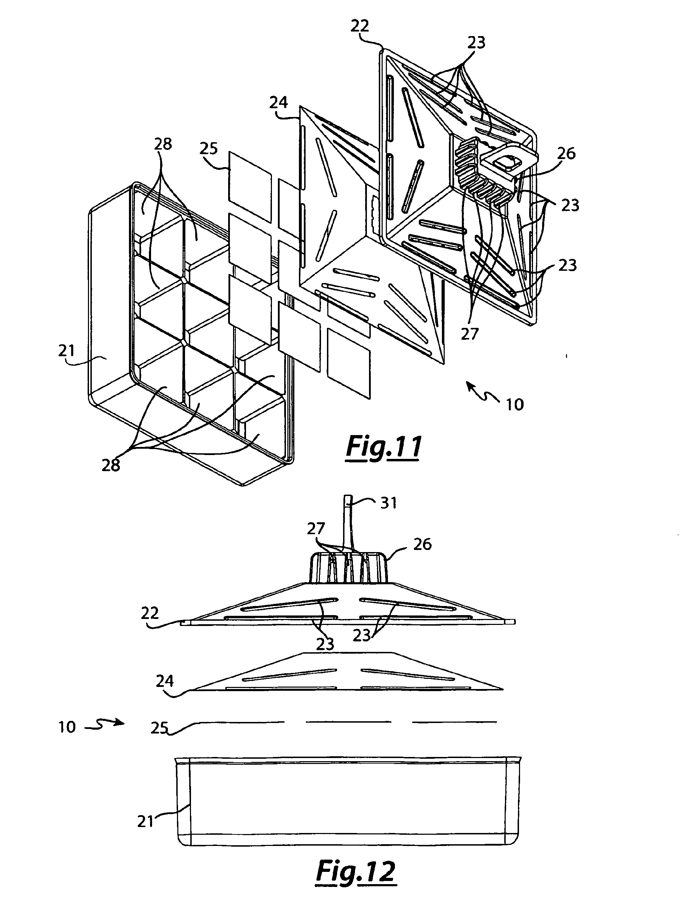

The containment body 21 is preferably provided with a cellular structure, comprising a plurality of filtering cells 28, as shown in the enclosed figure 11.

In particular, this type of structure maximizes the effectiveness of the resin exchange and the distribution of water within the filtering bed.

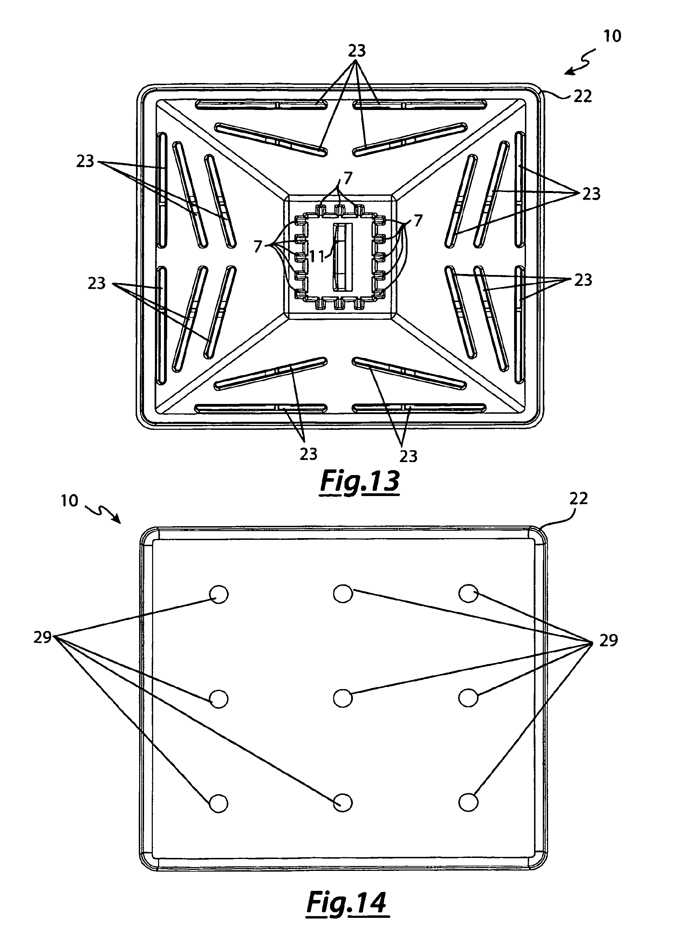

Each single filtering cell 28 is provided with an outlet opening 29 (figure 14) of a suitable diameter for a prefixed flow rate.

The second micrometer grid 25 is placed inside the filtering cells 28; this arrangement allows having pressure drops in the water flow, thus making sure that the filtering material has time to act on the water.

In particular, the opening 29 has a diameter negligible with respect to the base surface of the filtering cell 28, so that the latter virtually constitutes a funnel.

Furthermore, the second micrometer grid 25 provides for a mechanical filtering of the water by purifying it from any impurities and also prevents the escaping of the filtering material which is contained within the containment body 21.

Therefore, the filter 10 has advantageously a large filtering capacity and, as mentioned, it is effective for a sanitizing treatment up to 1000 liters of water; based on the average value of use frequency by a family (which consumes about 3 liters per day of drinking water) and based on the chemical composition limits of the drinking water to be treated (which are imposed by applicable laws), the above mentioned filter 10 can be replaced every around 6 months.

Since the filtering material is uniformly distributed in the containment body 21, the subdivision of the material within each single filtering cells 28 allows, in particular, a greater uniformity of the water distribution and the water is able to uniformly flow through each filtering cell 28; in other words, no preferential paths of the water flow passing through the filtering material are created.

In a preferred embodiment of the invention, the filter 10 is divided into infinitesimal filtering cells 28, which are large as a grain of filtering material, thus constituting the best solution to the technical problem of obtaining a uniform distribution and exploitation of the material.

However, even with greater dimensions of said filtering cells 28, the structure is still effective, since the cellular structure of the filter 10 is advantageously more stiff with respect to the containment bodies of the known delivering devices and, in particular, avoids any deformations of the base, due to the placement of the filter 10 in its seat inside the dispensing and/or filtering device.

As already mentioned above, each filtering cell 28 has a single outlet opening 29; also this arrangement gives many advantages, since it allows to maximize the time interval during which the water contacts the filtering material, so that the filtering material effectively works with uniform flow inside the filtering cell 28.

The diameter of the outlet opening 29 may also be sized by calculating a predetermined value of the pressure drop, so as to set a prefixed velocity of the water flow.

Still advantageously, the outlet opening 29 is exclusively constituted by a through hole and there is no need for providing an external duct, as provided in other known devices.

The use of an outlet opening 29 for each filtering cell 28, together with the co-molding of the second micrometer grid 25, which has a rate less than or equal to 150 micron, overlapping the output opening, allows to obtain the pressure drop required to slow down the water flow and, at the same time, to avoid that the filtering material is able to come out from the containment body 21.

The slots 23 of the cover element 22 are also provided through a co-molding technique, thus obtaining the same advantages of the holes provided in the filtering cells 28, i.e. water flow uniformity and withholding of the filtering material.

Furthermore, by adopting the above technique, the filter 10 can be made with a greater manufacturing easiness, with respect to the prior art, as well as a greater precision during the plastic molding can be obtained.

The UV reactor 9 of the dispensing device 100 is formed by a stainless steel chamber, in which a UV lamp 9A (whose ignition is effected via a high frequency electronic ballast) is placed; the water to be sanitized and purified flows through said lamp 9A, so as to use the capacity of the ultraviolet light rays (UV-C, in particular with a peak at 254 nm) for sanitizing and purifying water; the UV lamp 9A, in turn, is shielded by a quartz tube 9B, so that water does not directly contact the UV lamp 9A.

The load tank 6, having a mainly horizontal structure and having placed upward with respect to the filter 10 and the UV reactor 9, allows, thanks to its placement, a prevalence value so that the water firstly flows inside the filter 10 and then it flows into the UV reactor 9, before the water is able to come out from a nozzle 11 placed below the button 4.

Furthermore, the device 100 is preferably equipped with a group carbonation device 13, comprising an injector with a screw system and suitable valves for depressurization; moreover, a suitable nozzle 14 is provided for obtaining sparkling water by pressing a gas dispensing button 15, which in turn transmits a pressure on an output valve of a carbon dioxide cylinder.

The device 100 is also preferably provided with a signaling and monitoring lighting system, whose indicator 3 (with front light guide) shows the status of the water load tank 6, by means of suitable level sensors, the activation of the UV reactor 9 and/or the indication, through the control of a suitable electronic circuit of the above-mentioned control unit, about the actual use of the filter 10 on the basis of the actual amount of the filtered water; in particular, the indication of the operating status of the device 100 is displayed through a color coding, according to which a green light indicates that the power is on, that the dispenser is ready to be loaded with water or ready to deliver filtered and sanitized water (when the device is already loaded with water), a blue flashing light indicates a preparing phase for switching on the UV reactor 9, a blue fixed light indicates a correct functioning of the UV reactor's lamp 9 and the opening of a solenoid valve for starting the water supply, a white light indicates the gas supply by means of the carbonation group 13, a fixed red light indicates that there is a problem in the UV reactor 9, a flashing and alternately red and blue light indicates that the filter cartridge or filter 10 is to be replaced, while a flashing and alternately red and white light indicates that the gas cylinder is to be replaced.

Of course, this color code is herewith given only by example and may include other suitable colors; in particular, the combination of the above mentioned colors/functions is based on an aesthetic appearance rather than on a technical one.

The functioning of the water dispensing, sanitizing and purifying device of the present invention is substantially as follows.

After manually loading the load tank 6 with drinking water, through the jug 12, it is possible to supply filtered and purified water by means of the dispensing push-button 4.

The operations performed by the device 100 are provided according to the time during which the dispensing push-button 4 is pressed.

In particular, with a single press of said dispensing push-button 4, it is possible to start a pre-heating phase and the switching on of the sanitizer UV reactor 9; when the sanitization phase is on, an outlet valve is opened and the water coming from the load tank 6 flows partially through the control or throttle valve 7 and partially through the filter 10, so as to flow into the UV reactor 9 and reach an output electro-valve 16.

In particular, a single pressure activates the device 100 for a time enough for filling a 1 liter water bottle.

Alternatively, it is possible to fill a bottle, which can be supplied with the dispensing device according to the invention, having a total capacity of 1 liter but really filled up to about 900cc.

Additionally, a single press of the dispensing push-button 4 when the filling phase is on causes a dispensing stop (in particular, said press causes a closing of the output electro-valve 16, while the lamp 9A of the UV reactor 9 is still switched on for the same time required for filling a 1 liter water bottle, i.e. approximately for 1 minute, in order to preserve the life of the lamp 9A and to avoid any delays during the subsequent water dispensing phases).

A long press of the dispensing push-button 4, i.e. for a time extending beyond 3 seconds, causes the starting of the water supply, which goes on only for the time during which the push-button 4 is pressed, while the release of the dispensing push-button 4 causes the stop of the water dispensing phase.

Once the supply of filtered and sanitized water is carried out and drinking water is contained inside the bottle 2, the same amount of water may also be carbonated with the same device 100, simply by screwing the bottle 2 containing the filtered water to the carbonation group 13, placed in correspondence of the nozzle 14, and by pressing the gas supplying button 15.

The above description clearly outlines the technical features of the water dispensing device, which is the object of the present invention, as well as the related advantages appear very clear.

In particular, said advantages include the following:
- the dispensing device can be manually filled through the jug 12 (the device therefore does not require a fixed or semi-fixed connection to the household hydraulic system);
- easy and intuitive functioning;
- high load capacity (up to 2 liters);
- sanitizing function, by means of ultraviolet rays (UV), and use of a suitable filter; it is thus possible to filter water by removing contaminants, as well as the chlorination residue (causing the bad taste of water), and by maintaining or giving microbiological purity to the water thanks to the UV sterilization without making any chemical treatment;
- rational and efficient use of the dispensing device of the present invention, with respect to the known dispensing devices, due to the filtering capacity of the filtering cartridge and thanks to the measurement of the actual amount of water that is actually filtered; this also involves an increase in safety and reliability of the filter element, even in case of overuse, misuse or malfunction of the counting logic units (cover's openings) or time units;
- clear indication of the functioning state of the device thanks to LED lights and/or light guides having different colors; in particular, the device is able to control and indicate the filter's conditions and the functioning conditions of the UV sterilization device;
- the filtering cartridge lasts longer than the known filtering cartridges (up to 1000 liters of water) and said cartridges can be replaced each 6 months/1 year, depending on the frequency of use of the dispensing device and on the chemical composition of the drinking water (the above timing is considered as an average value for the frequency of use of a family that consumes about 3 liters per day of drinking water having a chemical composition corresponding to the limits imposed by applicable law);
- longer life, with respect to the prior art, of the UV reactor's lamp, as said lamp is not continuously switched on but it is switched on only for a time period corresponding to the sterilization phase (unlike the filtering cartridge, the lamp is not a consumption element);
- great uniformity of action, with respect to the prior art, both of the filtering cartridge and of the UV rays sterilization system, due to the fact that the device is not connected to the water mains and therefore is not affected by water pressure variations;
- clear indication of the functioning conditions of the dispensing device, of the filtering cartridge, of the UV sterilization reactor and of the carbonator group's cylinder;
- complete portability of the device, thanks to the fact that the dispensing device can be battery powered.

Finally, it is clear that many other variations may be made to the dispensing device of the present invention, without for this reason departing from the novelty principles of the inventive idea as expressed in the appended claims.

## Claims

1. A water dispensing device (100), comprising a base plate (1) for one or more containers (2) to be filled with filtered and purified water, an external structure comprising indicator means (3) for showing the functioning of the device (100) and further comprising at least one dispensing push-button (4), operable and stoppable by a user through at least one press action, for supplying filtered and purified water, at least one compartment (5) of said structure comprising, contained therein at least one loading tank (6) of drinking water, the water dispensing device further comprising a UV reactor (9), at least one replaceable filtering cartridge or filter 10 (10) and an electronic control unit, at least one control or throttling valve, said loading tank (6) being coupled to said at least one control or throttle valve (7), which is able to flow the drinking water from the loading tank (6) to said filter (10) and from said filter (10) into the UV reactor (9), **characterized in that** said filter (10) comprises a covering element (22) having inlet openings (23) for flowing water in a 15 prefixed direction, a containment body (21) containing filtering material and having outlet openings (29) for flowing water according to said prefixed direction, and a first grid (24), provided with micrometer openings and interposed between said filtering material and said covering element (22), said containment body (21) having a cellular structure with a mainly 20 horizontal development and comprising a plurality of filtering cells (28), each of which having a fixed volume.

2. A device (100) according to claim 1, **characterized in that** a carbonation group (13) is placed within said structure, said carbonation group (13) comprising an injector and valves for depressurizing and carbonating said 25 filtered and purified water.

3. A device (100) according to claim 1, **characterized in that** said loading tank (6) has a mainly horizontal structure, is accessible from outside and is positioned over said UV reactor (9) and said filter (10).

4. A device (100) according to at least one of the claims 1-3, **characterized** 30 **in that** said UV reactor (9) comprises a chamber, in which a UV lamp is inserted, whose switching on is carried out through a high frequency electronic ballast, drinking water coming from said loading tank (6) also flowing through said chamber so that the water can be sanitized in-line during the flowing, by means of UV-C band ultraviolet light rays.

5. A device (100) according to at least one of the claims 1-4, **characterized in that** said indicator means (3) for showing the functioning of the device (100) are provided for signaling, through a color coding, if the reactor (9) is switched on and/or, through an electronic processing, the use of said filter (10) on the basis of the amount of water which is actually filtered.

6. A device (100) according to at least one of the claims 1-5, **characterized in that** said device (100) is battery powered.

7. A device (100) according to at least one of the claims 1-6, **characterized in that** said lamp of the UV reactor (9) is kept switched on for a time interval equal to the water delivery time, as a result of a pressure of said dispensing push-button (4), or equal to the time required to fill a container of a prefixed capacity.

8. A device (100) according to at least one of the claims 1-7, **characterized in that** said loading tank (6) of the drinking water has a regulating valve (7) placed on its bottom for adjusting the water flow to be dispensed.

9. A device (100) according to claim 1, **characterized in that** said outlet openings (29) of said containment body (21) comprise through-openings (29) provided in each of said filtering cells (28), each of said through openings (29) having a size proportional to the respective volume of said filtering cell (28), so as to determine a prefixed water flow rate.

10. A device (100) according to claim 9, **characterized in that** said filter (10) has a second grid (25) provided with micrometer openings and interposed between said filtering material and said outlet openings (29) of said containment body (21).

11. A device (100) according to claim 10, **characterized in that** at least one of said first (24) and second (25) grids is fixed, respectively, at said inlet openings (23) and at said outlet openings (29), through a co-molding action.

12. A device (100) according to at least one of the preceding claims 1 and 9-11, **characterized in that** said covering element (22) has a substantially pyramidal shape, comprising a tip and a plurality of faces, said tip being oriented in a direction opposite to the flowing direction of water.

13. A device (100) according to at least one of the preceding claims 1 and 9-12, **characterized in that** said inlet openings (23) comprise a plurality of through slots arranged uniformly on each face of said covering element (22).

14. A device (100) according to at least one of the preceding claims 1 and 9-13, **characterized in that** said device (100) has, in correspondence of said tip of said covering element (22), one or more through openings (27), which are provided for flowing air.

## Patentansprüche

1. Wasserspender (100), umfassend eine Grundplatte (1) für einen oder mehrere Behälter (2), die mit gefiltertem und gereinigtem Wasser gefüllt werden können, und eine äußere Struktur, umfassend Anzeigemittel (3) zum Anzeigen der Funktionsweise der Vorrichtung (100) und ferner umfassend zumindest eine Abgabedrucktaste (4), die durch einen Benutzer mittels zumindest einer Druckbetätigung zur Bereitstellung von gefiltertem und gereinigtem Wasser betrieben und gestoppt werden kann, wobei zumindest ein Fach (5) der Struktur einen darin enthaltenen Ladetank (6) für Trinkwasser aufweist, wobei der Wasserspender ferner einen UV-Reaktor (9), zumindest eine austauschbare Filterkartusche oder Filter (10) und eine elektronische Steuereinheit, und zumindest ein Steuer- oder Drosselventil aufweist, wobei der Ladetank mit dem zumindest einen Steuer- oder Drosselventil (7) gekoppelt ist, das in der Lage ist, das Trinkwasser von dem Ladetank (6) zum Filter (10) und von dem Filter (10) in den UV-Reaktor (9) fließen zu lassen, **dadurch gekennzeichnet, dass** der Filter (10) ein Abdeckelement (22) mit Einlass-Öffnungen (23), um Wasser in eine vorgegebene Richtung fließen zu lassen, einen Einschlusskörper (21), der Filtermaterial enthält und Auslass-Öffnungen (29) aufweist, um Wasser gemäß der vorgegebenen Richtung fließen zu lassen, und ein erstes Gitter (24), das mit Mikrometer-Öffnungen versehen ist und zwischen dem Filtermaterial und dem Abdeckelement (22) vorgesehen ist, umfasst, wobei der Einschlusskörper (21) eine Zellstruktur mit einer hauptsächlich horizontalen Ausprägung hat und eine Vielzahl von Filterzellen (28) aufweist, von denen jede ein festes Volumen hat.

2. Eine Vorrichtung (100) nach Anspruch 1, **dadurch gekennzeichnet, dass** eine Kohlensäuregruppe (13) innerhalb der Struktur platziert ist, wobei die Kohlensäuregruppe (13) einen Injektor und Ventile zur Druckentspannung und Karbonisierung des gefilterten und gereinigten Wassers aufweist.

3. Eine Vorrichtung (100) nach Anspruch 1, **dadurch gekennzeichnet, dass** der Ladetank (6) hauptsächlich eine horizontale Struktur aufweist, von außerhalb zugänglich ist und oberhalb des UV-Reaktors (9) und des Filters (10) positioniert ist.

4. Eine Vorrichtung (100) nach zumindest einem der Ansprüche 1 bis 3, **dadurch gekennzeichnet, dass** der UV-Reaktor (9) eine Kammer aufweist, in der eine UV-Lampe eingesetzt ist, deren Anschalten durch ein elektronisches Hochfrequenz-Vorschaltgerät ausgeführt wird, wobei von dem Ladetank (6) kommendes Trinkwasser ebenfalls durch diese Kammer fließt, so dass Wasser inline während des Fließens durch ultraviolette Lichtstrahlen des UV-C-Bandes desinfiziert werden kann.

5. Eine Vorrichtung (100) nach zumindest einem der Ansprüche 1 bis 4, **dadurch gekennzeichnet, dass** die Anzeigemittel (3) zum Anzeigen der Funktionsweise der Vorrichtung (100) ausgeführt sind, über eine Farbkodierung zu signalisieren, ob der Reaktor (9) angeschaltet ist, und/oder über eine elektronische Verarbeitung den Gebrauch des Filters (10) auf Basis der Wassermenge, die tatsächlich gefiltert wurde, zu signalisieren.

6. Eine Vorrichtung (100) nach zumindest einem der Ansprüche 1 bis 5, **dadurch gekennzeichnet, dass** die Vorrichtung (100) batteriebetrieben ist.

7. Eine Vorrichtung (100) nach zumindest einem der Ansprüche 1 bis 6, **dadurch gekennzeichnet, dass** die Lampe des UV-Reaktors (9) für ein Zeitintervall angeschaltet bleibt, das der Wasserauslieferzeit entspricht, als Ergebnis eines Drucks auf die Abgabedrucktaste (4), oder das gleich der Zeit ist, die benötigt wird, um einen Container einer vorgegebenen Kapazität zu füllen.

8. Eine Vorrichtung (100) nach zumindest einem der Ansprüche 1 bis 7, **dadurch gekennzeichnet, dass** der Ladetank (6) des Trinkwassers ein Steuerventil (7) aufweist, das auf seinem Boden platziert ist, um den Fluss des abzugebenden Wassers anzupassen.

9. Eine Vorrichtung (100) nach Anspruch 1, **dadurch gekennzeichnet, dass** die Auslassöffnungen (29) des Einschlusskörpers (21) Durchgangsöffnungen (29) umfassen, die in jeder der Filterzellen (28) vorgesehen sind, wobei jede dieser Durchgangsöffnungen (29) eine Größe hat, die proportional zu dem entsprechenden Volumen der Filterzelle (28) ist, um so eine vorgegebene Wasserflussrate festzulegen.

10. Eine Vorrichtung (100) nach Anspruch 9, **dadurch gekennzeichnet, dass** der Filter (10) ein zweites Gitter (25) hat, das mit Mikrometer-Öffnungen versehen ist und das zwischen dem Filtermaterial und den Auslass-Öffnungen (29) des Einschlusskörpers (21) vorgesehen ist.

11. Eine Vorrichtung (100) nach Anspruch 10, **dadurch gekennzeichnet, dass** zumindest eines der ersten (24) und zweiten (25) Gitter jeweils an den Einlassöffnungen (23) und an den Auslassöffnungen (29) über einen Co-Formungsvorgang befestigt ist.

12. Eine Vorrichtung (100) nach zumindest einem der vorhergehenden Ansprüche 1 und 9 bis 11, **dadurch gekennzeichnet, dass** das Abdeckelement (22) eine im Wesentlichen pyramidenförmige Form aufweist, umfassend eine Spitze und eine Mehrzahl von Seiten, wobei die Spitze in eine zu der Flussrichtung des Wassers entgegengesetzte Richtung orientiert ist.

13. Eine Vorrichtung (100) nach zumindest einem der vorhergehenden Ansprüche 1 und 9 bis 12, **dadurch gekennzeichnet, dass** die Einlassöffnungen (23) eine Vielzahl von Durchgangs-Schlitzen aufweisen, die gleichmäßig auf jeder Seite des Abdeckelements (22) angeordnet sind.

14. Eine Vorrichtung (100) nach zumindest einem der vorhergehenden Ansprüche 1 und 9 bis 13, **dadurch gekennzeichnet, dass** die Vorrichtung (100), korrespondierend zu der Spitze des Abdeckelements (22), eine oder mehrere Durchgangsöffnungen (27) aufweist, die zur Luftdurchströmung vorgesehen sind.

## Revendications

1. Dispositif de distribution d'eau (100), comprenant une plaque de base (1) pour un ou plusieurs conteneurs (2) destinés à être remplis d'eau filtrée et purifiée, une structure externe comprenant des moyens indicateurs (3) pour montrer le fonctionnement du dispositif (100) et comprenant en outre au moins un bouton-poussoir de distribution (4), pouvant être actionné et arrêté par un utilisateur par l'intermédiaire d'au moins une action de pression, pour fournir de l'eau filtrée et purifiée, au moins un compartiment (5) de ladite structure comprenant, contenu dans celui-ci, au moins un réservoir de remplissage (6) d'eau de boisson, le dispositif de distribution d'eau comprenant en outre un réacteur à UV (9), au moins une cartouche de filtration ou un filtre remplaçable (10) et une unité de commande électronique, au moins une vanne de commande ou d'étranglement, ledit réservoir de remplissage (6) étant couplé à ladite au moins une vanne de commande ou d'étranglement (7), qui est capable de faire s'écouler l'eau de boisson du réservoir de remplissage (6) vers ledit filtre (10) et dudit filtre (10) jusque dans le réacteur à UV (9), **caractérisé en ce que** ledit filtre (10) comprend un élément de couverture (22) ayant des orifices d'entrée (23) pour l'écoulement de l'eau dans une direction prédéfinie, un corps de confinement (21) contenant un matériau de filtration et ayant des orifices de sortie (29) pour l'écoulement de l'eau selon ladite direction prédéfinie, et une première grille (24), pourvue d'ouvertures micrométriques et intercalée entre ledit matériau de filtration et ledit élément de couverture (22), ledit corps de confinement (21) ayant une structure cellulaire présentant un développement principalement horizontal et comprenant une pluralité de cellules de filtration (28), ayant chacun un volume fixe.

2. Dispositif (100) selon la revendication 1, **caractérisé en ce qu'**un groupe de carbonatation (13) est placé dans ladite structure, ledit groupe de carbonatation (13) comprenant un injecteur et des vannes pour la dépressurisation et la carbonatation de ladite eau filtrée et purifiée.

3. Dispositif (100) selon la revendication 1, **caractérisé en ce que** ledit réservoir de remplissage (6) a une structure principalement horizontale, est accessible depuis l'extérieur et est positionné sur ledit réacteur à UV (9) et ledit filtre (10).

4. Dispositif (100) selon au moins l'une des revendications 1 à 3, **caractérisé en ce que** ledit réacteur à UV (9) comprend une chambre, dans laquelle est insérée une lampe à UV, dont l'allumage est effectué par l'intermédiaire d'un ballast électronique à haute fréquence, de l'eau de boisson provenant dudit réservoir de remplissage (6) s'écoulant également à travers ladite chambre de telle sorte que l'eau puisse être désinfectée en ligne pendant son écoulement, au moyen de rayons de lumière ultraviolette dans la bande des UV-C.

5. Dispositif (100) selon au moins l'une des revendications 1 à 4, **caractérisé en ce que** lesdits moyens indicateurs (3) pour montrer le fonctionnement du dispositif (100) sont prévus pour signaler, via un codage couleur, si le réacteur (9) est allumé et/ou, via un traitement électronique, l'utilisation dudit filtre (10) en fonction de la quantité d'eau qui est réellement filtrée.

6. Dispositif (100) selon au moins l'une des revendications 1 à 5, **caractérisé en ce que** ledit dispositif (100) est alimenté par batterie.

7. Dispositif (100) selon au moins l'une des revendications 1 à 6, **caractérisé en ce que** ladite lampe du réacteur à UV (9) est maintenue allumée pendant un intervalle de temps égal à la durée de distribution d'eau, en conséquence d'une pression sur ledit bouton-poussoir de distribution (4), ou égal au temps requis pour remplir un conteneur d'une capacité prédéfinie.

8. Dispositif (100) selon au moins l'une des revendications 1 à 7, **caractérisé en ce que** ledit réservoir de remplissage (6) de l'eau de boisson a une vanne de régulation (7) placée sur son fond pour l'ajustement de l'écoulement d'eau à distribuer.

9. Dispositif (100) selon la revendication 1, **caractérisé en ce que** lesdits orifices de sortie (29) dudit corps de confinement (21) comprennent des orifices débouchants (29) prévus dans chacune desdites cellules de filtration (28), chacun des orifices débouchants (29) ayant une taille proportionnelle au volume respectif de ladite cellule de filtration (28), de façon à déterminer un débit d'eau prédéfini.

10. Dispositif (100) selon la revendication 9, **caractérisé en ce que** ledit filtre (10) a une deuxième grille (25) pourvue d'ouvertures micrométriques et intercalée entre ledit matériau de filtration et lesdits orifices de sortie (29) dudit corps de confinement (21).

11. Dispositif (100) selon la revendication 10, **caractérisé en ce qu'**au moins l'une desdites première (24) et deuxième (25) grilles est fixée au niveau, respectivement, desdits orifices d'entrée (23) et desdits orifices de sortie (29), sous l'effet d'une action de co-moulage.

12. Dispositif (100) selon au moins l'une des revendications précédentes 1 et 9 à 11, **caractérisé en ce que** ledit élément de couverture (22) a une forme essentiellement pyramidale, comprenant un sommet et une pluralité de faces, ledit sommet étant orienté dans une direction opposée à la direction d'écoulement de l'eau.

13. Dispositif (100) selon au moins l'une des revendications précédentes 1 et 9 à 12, **caractérisé en ce que** lesdits orifices d'entrée (23) comprennent une pluralité de fentes débouchantes disposées uniformément sur chaque face dudit élément de couverture (22).

14. Dispositif (100) selon au moins l'une des revendications précédentes 1 et 9 à 13, **caractérisé en ce que** ledit dispositif (100) a, en correspondance dudit sommet dudit élément de couverture (22), un ou plusieurs orifices débouchants (27), qui sont prévus pour l'écoulement d'air.
